# EUROPÄISCHE PATENTANMELDUNG

(11) **EP 1 865 396 A2**
(43) Veröffentlichungstag der Anmeldung: **12.12.2007**
(21) Anmeldenummer: 07104814.4
(22) Anmeldetag: 23.03.2007
(51) Int. Cl.: G05D 1/02, A01B 79/00

(54) **Verfahren und Vorrichtung zur Anzeige von Fahrzeugbewegungen**

(30) Priorität: 06.06.2006 DE 102006026572
(71) Anmelder: CLAAS Selbstfahrende Erntemaschinen GmbH, 33428 Harsewinkel (DE)
(72) Erfinder: Meyer zu Helligen, Lars Peter, 32139 Spenge (DE); Nienaber, Gerhard, 59320 Ennigerloh (DE); Brunnert, Andreas, 33397 Rietberg (DE); Diekhans, Norbert Dr., 33335 Gütersloh (DE)

(57) **Zusammenfassung**

Die Erfindung betrifft ein Verfahren und eine Vorrichtung zur Visualisierung der Bewegung eines Fahrzeugs (1, 2), wobei das Fahrzeug (1, 2) zumindest eine mit einer Steuer- und Auswerteinheit (12) gekoppelte Anzeigeeinheit (14) umfasst und wobei die Steuer- und Auswerteinheit (12) mit zumindest einem Spurführungssystem (48) zur Führung des Fahrzeugs (1, 2) entlang von Fahrtrouten (18) gekoppelt ist und die Steuer- und Auswerteinheit (12) zumindest einen die Ausrichtung des Fahrzeugs (1, 2) beschreibenden charakteristischen Ausrichtungsparameter (32) erfasst und wobei die Steuer- und Auswerteinheit (12) unter Berücksichtigung des zumindest einen charakteristischen Ausrichtungsparameters (32) des Fahrzeugs (1, 2) eine virtuelle zukünftige Fahrspur (37) des Fahrzeugs (1, 2) ermittelt und diese virtuelle zukünftige Fahrspur (37) in der Anzeigeeinheit (14) visualisiert wird. Auf diese Weise erhält der Betreiber (13) des Fahrzeuges (1, 2) zumindest eine Information darüber, auf welcher zukünftigen Fahrspur (37) sich sein Fahrzeug (1, 2) unter Beibehaltung der gegenwärtigen Fahrzeugausrichtung und unter Berücksichtigung charakteristischer Parameter des Fahrzeugs (1, 2) bewegen wird.

## Beschreibung

Die Erfindung betrifft ein Verfahren und eine Vorrichtung zur Visualisierung der Bewegung eines Fahrzeugs nach dem Oberbegriff der Ansprüche 1 und 21.

Aus dem Stand der Technik sind unter anderem sogenannte Routenplanungssysteme bekannt geworden, die neben der Aufzeichnung von Fahrtrouten eines über ein zu bearbeitendes Territorium bewegten Fahrzeuges auch das automatische Abarbeiten zuvor programmierter Fahrtrouten durch das besagte Fahrzeug umfassen. Beispielsweise beschreibt die DE 43 42 171 für einen Bodenbearbeitungsprozess unter Zuhilfenahme GPS-basierter Positionsdaten die Aufzeichnung von Wegstrecken, die die Sodenbearbeitungsmaschine auf einem zu bearbeitenden Territorium zurückgelegt hat. Die so ermittelten Fahrstreckendaten der landwirtschaftlichen Arbeitsmaschine werden dann je nach Ausgestaltung der Datenverarbeitungseinrichtung auf der jeweiligen landwirtschaftlichen Arbeitsmaschine oder in einer zentralen Recheneinheit in Fahrtroutendaten umgewandelt, die dann sowohl online angezeigt werden können als auch wiederabrufbar abspeichbar sind. Derartige Systeme haben vor allem den Nachteil, dass das Fahrzeug zunächst eine bestimmte Fahrtroute abarbeiten muss, bevor diese wiederabrufbar in der Speichereinheit vorliegt und gegebenenfalls als Basisdatensatz zur Generierung von zukünftig abzuarbeitenden Fahrtrouten verfügbar ist oder in beliebigen Anzeigeeinheiten visualisiert werden kann.

Ein heute typischerweise eingesetztes Verfahren einer Routenplanung im Zusammenhang mit sogenannten automatischen Spurführungssystemen ist unter anderem in der US 6,236,924 offenbart. Indem softwareunterstützt zunächst ein zu bearbeitendes Territorium über markante Referenzpunkte ausgewählt wird und sodann dieses selektierte Territorium in definierte Fahrtrouten unter verschiedenen Optimierungskriterien aufgeteilt wird, kann dem Fahrzeug ein vordefinierter Routenplan übergeben werden nach dem das Fahrzeug automatisch über das zu bearbeitende Territorium geführt wird, Während des Abarbeitens der vordefinierten Fahrtrouten wird dann in der Regel die tatsächlich abgefahrene Fahrtroute aufgezeichnet. Auch derartigen Systemen haftet der Nachteil an, dass die Visualisierung von Fahrtrouten auf den zuvor erstellten Routenplan oder die von dem Fahrzeug tatsächlich zurückgelegte Fahrtroute beschränkt ist.

Es ist deshalb Aufgabe der Erfindung die beschriebenen Nachteile des Standes der Technik zu vermeiden und ein Anzeigesystem für die Visualisierung von Bewegungen eines Fahrzeugs vorzuschlagen, was dem Betreiber des Fahrzeugs neben den bekannten Fahrtrouteninformationen darüber hinausgehende Informationen bereitstellt

Diese Aufgabe wird erfindungsgemäß durch die kennzeichnenden Merkmale der Ansprüche 1 und 21 gelöst.

Indem die dem Fahrzeug zugeordnete Steuer- und Auswerteinheit unter Berücksichtigung zumindest eines charakteristischen Ausnchtungsparameters des Fahrzeugs eine virtuelle zukünftige Fahrspur des Fahrzeugs ermittelt und diese virtuelle zukünftige Fahrspur in der Anzeigeeinheit visualisiert wird, erhält der Betreiber des Fahrzeuges zumindest eine Information darüber, auf welcher zukünftigen Fahrspur sich sein Fahrzeug unter Beibehaltung der gegenwärtigen Fahrzeugausrichtung und unter Berücksichtigung charakteristischer Parameter des Fahrzeugs bewegen wird. Dies schafft für den Betreiber des Fahrzeugs die Möglichkeit, frühzeitig in den Lenkprozess eingreifen zu können, um gezielt eine bestimmte Fahrspur abzuarbeiten, ein Hindernis sicher zu umfahren oder eine nachfolgende Fahrspur relativ präzise und auf kurzem Weg zu erreichen,

Damit die zu ermittelnde zukünftige Fahrspur relativ gut die tatsächlich von dem Fahrzeug abfahrbare Fahrtroute darstellt ist in einer vorteilhaften Ausgestaltung der Erfindung vorgesehen, dass der oder die charakteristischen Ausrichtungsparameter den Achsabstand oder den minimalen Wendekreis des Fahrzeugs und den momentanen Lenkwinkel umfassen, Die ermittelte und anzuzeigende zukünftige Fahrspur wird dann die von dem Fahrzeug tatsächlich befahrbare zukünftige Fahrspur um so genauer angeben, wenn in einer weiteren vorteilhaften Ausgestaltung der Erfindung der oder die charakteristischen Ausrichtungsparameter auch den Achsabstand oder den minimalen Wendekreis des Fahrzeugs eine Kombination aus Gierrate und Fahrgeschwindigkeit des Fahrzeugs umfassen. Die Qualität der zu ermittelnden zukünftigen Fahrspur lässt sich auch dadurch noch steigern, wenn die charakteristischen Ausrichtungsparameter weiterhin die Ausrichtung des Fahrzeugs und die Ausrichtung der abzufahrenden Fahrtroute umfassen.

Damit der Betreiber des Fahrzeugs ständig über das zu erwartende Bewegungsverhalten seines Fahrzeugs unterrichtet ist und damit frühzeitig Korrekturen einleiten oder unmittelbar vornehmen kann, ist in einer vorteilhaften Ausgestaltung der Erfindung vorgesehen, dass die visualisierte virtuelle zukünftige Fahrspur permanent ermittelt und angezeigt wird.

Eine für den Betreiber leicht verständliche und die zu erwartenden Fahrzeugbewegungen sehr real wiedergebende Anzeige der zukünftigen Fahrtroute wird dann erreicht, wenn in vorteilhafter Ausgestaltung der Erfindung die visualisierte virtuelle zukünftige Fahrspur einen Krümmungsradius aufweist und der Krümmungsradius sich in Abhängigkeit vom Lenkwinkel oder der Gierrate andert.

In vorteilhafter Weiterbildung der Erfindung erfolgt die Anzeige der virtuellen zukünftigen Fahrspur in der Weise, dass in der Anzeigeeinheit die aktuelle Position des Fahrzeugs visualisiert wird und in Bewegungsrichtung des Fahrzeugs die virtuelle zukünftige Fahrspur als Führungslinie der visualisierten Position des Fahrzeugs vorausläuft Auf diese Weise wird dem Betreiber des Fahrzeugs ein übersichtliches und leicht verständliches Anzeigesystem der zukünftigen Bewegung seines Fahrzeugs an die Hand gegeben.

Ein besonders wirkungsvolles Navigationshilfsmittel wird dem Betreiber eines Fahrzeugs dann bereitgestellt, wenn in vorteilhafter Ausgestaltung der Erfindung eine oder mehrere Fahrtrouten des Spurführungssystems und die virtuelle zukünftige Fahrspur in einer gemeinsamen Anzeige visualisiert werden. Dies hat insbesondere den Vorteil, dass der Betreiber des Fahrzeugs mit Hilfe der Anzeige einen optimalen Fahrweg zum Erreichen einer nächsten abzuarbeitenden Fahrspur wählen und gezielt ansteuern kann. Mithin bildet die erfindungsgemäße Anzeige damit eine sogenannte Einfädelhilfe für den Betreiber des Fahrzeugs.

Zur Verbesserung der Übersichtlichkeit der Anzeige kann in einer vorteilhaften Weiterbildung der Erfindung vorgesehen sein, dass die von dem Fahrzeug abzufahrende Fahrtroute in eine Vielzahl von virtuellen Stützstellen unterteilt wird und für den zwischen benachbarten Stützstellen liegenden Konturabschnitt der Fahrtroute jeweils die Bahnkrümmung ermittelt und in einer Anzeigeneinheit visualisiert wird. Auf diese Weise kann die für den Betreiber des Fahrzeugs relevante Information darauf beschrankt sein, welchen Bahnradius das Fahrzeug erreichen muss, damit letztlich die an Hand der Fahrtroute vordefinierte Fahrspur präzise abgefahren wird,

In einer vorteilhaften Ausgestaltung der Erfindung kann die, Anzeigeeinheit so beschaffen sein, dass die Fahrtroute und/oder die Bahnkrümmung eines Konturabschnitts angezeigt werden kann. Damit wird dem Betreiber des Fahrzeugs eine hochflexibel einsetztbare Navigationshilfe bereitgestellt, die flexibel an die Bedürfnisse des Betreibers anpassbar ist.

Eine besonders aussagefähige und Übersichtlich strukturierte Anzeige wird dann erreicht, wenn in vorteilhafter Weiterbildung der Erfindung die in einer Anzeigeeinheit visualisierte Bahnkrümmung eines Konturabschnitts der Fahrtroute der momentanen Position des Fahrzeugs auf der Fahrtroute entspricht. Dann ist die Anzeige unmittelbar auf die momentane Position des Fahrzeugs auf der abzuarbeitenden Fahrtroute beschränkt, das heißt die momentane Position des Fahrzeugs und die angezeigte Fahrtroutenkrümmung sind synchronisiert, sodass sich die Informationsdichte der Anzeige weiter erhöht.

Eine weitere Verbesserung der Übersichtlichkeit der Anzeige wird dann erreicht, wenn in vorteilhafter Ausgestaltung der Erfindung die momentane Position des Fahrzeugs auf der Fahrtroute in der Anzeigeeinheit einen Fußpunkt definiert in dem die Visualisierung der Kurve der Bahnkrümmung des jeweiligen Konturabschnitts beginnt und sich in Bewegungsrichtung des Fahrzeugs erstreckt.

Damit die einmal ermittelten Bahnkrümmungsdaten der Fahrtrouten für identisch strukturierte nachfolgende Fahrtrouten nachgenutzt werden können und nicht wiederholt berechnet werden müssen, ist in einer vorteilhaften Weiterbildung der Erfindung vorgesehen, dass die ermittelten Bahnkrümmungen in der Steuer- und Auswerteinheit editierbar hinterlegt werden und wiederholt abgerufen werden können. In diesem Zusammenhang ist es für eine hohe Flexibilität des Anzeigesystems von Vorteil, wenn die Krümmungsradien der hinterlegten Bahnkrümmungen änderbar sind, sodass gegebenenfalls bereits erstellt Krümmungsradien der Fahrtrouten teilweise für zukünftige Fahrtrouten übernommen werden können und nur in den abweichenden Bereichen neu erstellt werden müssen.

Indem aus der ermittelten Bahnkrümmung und wenigstens einem charakteristischen Ausrichtungsparameter des Fahrzeugs eine Sollfahrspur des Fahrzeugs abgeleitet wird, erlangt man eine extrem minimalistische Anzeige, die eine Vielzahl von Informationen derart komprimiert, dass der Betreiber nur noch mit einer abzuarbeitenden Fahrspur in der Anzeigeeinheit konfrontiert wird. Eine einfache technische Umsetzung dieser Anzeigestruktur wird dann erreicht, wenn die ermittelte Sollfahrspur in der Anzeigeneinheit visualisierbar ist und zugleich die Anzeige der jeweiligen Fahrtroute unterdrückt wird.

Damit dem Betreiber neben der von der Bahnkrümmung und zumindest einem charakteristischen Ausrichtungsparameter des Fahrzeugs abhängenden Sollfahrspur auch noch Informationen über zu erwartende Abweichungen der Bewegung des Fahrzeugs von dieser Sollfahrspur zur Verfügung stehen, ist in einer vorteilhaften Ausgestaltung der Erfindung vorgesehen, dass die ermittelte Sollfahrspur und die virtuelle zukünftige Fahrspur des Fahrzeugs in einer gemeinsamen Anzeige visualisiert werden.

Ein umfangreicher und dennoch klar strukturierter und damit übersichtlicher Informationsgehalt der Anzeige ergibt sich in einer weiteren vorteilhaften Ausgestaltung der Erfindung dann, wenn die momentane Position des Fahrzeugs, die ermittelte Sollfahrspur und die virtuelle zukünftige Fahrspur des Fahrzeugs gemeinsam in der Weise visualisiert werden, dass die Sollfahrspur und die virtuelle zukünftige Fahrspur des Fahrzeugs in Bewegungsrichtung des Fahrzeugs als Kurvenabschnitte der momentanen Position des Fahrzeugs zugeordnet sind.

In einer vorteilhaften Ausgestaltung der Erfindung ist die Länge der visualisierten Kurvenabschnitte der Sollfahrspur, der virtuellen zukünftigen Fahrspur und der Bahnkrümmung wählbar. Auf diese Weise wird dem Betreiber des Fahrzeugs eine hochflexible und an die Bedürfnisse des Betreibers des Fahrzeugs individuell anpassbare Anzeige bereitgestellt.

Indem in der Anzeigeeinheit zusätzlich die in Abhängigkeit von dem kleinstmöglichen Wendekreis abfahrbare Fahrtroute visualisiert wird, erhält der Betreiber eine weitere Navigationsunterstützung mittels derer er die nächstmöglich erreichbare Fahrtroute oder den kürzestmöglichen Fahrweg besser vorbestimmen kann.

Eine konstruktive einfache Umsetzung des erfindungsgemäßen Verfahren ergibt sich dann, wenn das Fahrzeug eine mit einer Steuer-und Auswerteinheit gekoppelte Anzeigeeinheit umfasst und wobei die Steuer- und Auswerteinheit mit zumindest einem Spurführungssystem zur Führung des Fahrzeugs entlang von Fahrtrouten gekoppelt ist und die Steuer- und Auswerteinheit unter Berücksichtigung zumindest eines charakteristischen Ausrichtungsparameters des Fahrzeugs eine virtuelle zukünftige Fahrspur des Fahrzeugs und/oder eine Sollfahrspur des Fahrzeugs und/oder eine Bahnkrümmung der Fahrtroute ermittelt und in einer Anzeigeeinheit visualisiert.

Weitere vorteilhafte Ausgestaltungen sind Gegenstand weiterer Unteransprüche und werden nachfolgend an Hand eines in mehreren Figuren dargestellten Ausführungsbeispiels beschrieben, Es zeigen :
- Figur 1: die schematische Ansicht eines Schleppers mit Spurführungssystem
- Figur 2: die schematische Ansicht der Anzeigeeinheit des Schleppers nach Fig. 1
- Figur 3: ein Detail der Struktur der Anzeigeeinheit nach Fig. 2
- Figur 4: eine weitere Detaildarstellung der Anzeigeeinheit nach Fig. 2

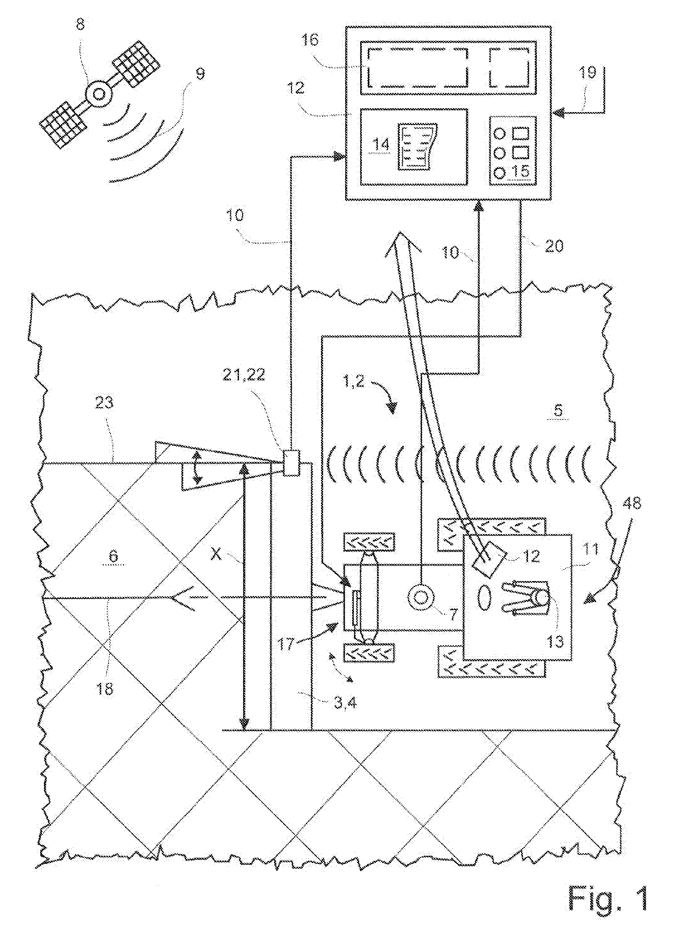

Fig. 1 zeigt ein als Traktor 2 ausgeführtes Fahrzeug 1 dem in seinem frontseitigen Bereich ein als Mähwerk 3 ausgebildetes Vorsatzgerät 4 zum Abernten eines in einem zu bearbeitenden Territorium 5 gewachsenen Bestandes 6 zugeordnet ist Der Traktor 2 verfügt über eine an sich bekannte GPS-Ortungsvorrichtung 7, die von sogenannten GPS-Satelliten 8 generierte Positionssignale 9 empfängt und aus diesen Positionssignale 10 des Traktors 2 generiert Im Bereich der Fahrerkabine 11 des Traktors 2 ist zudem wenigstens eine Steuer- und Auswerteinheit 12 im Wirkbereich des Betreibers 13 angeordnet, die gemäß ihrer schematischen Vergrößerung in Fig. 1 zumindest eine Anzeigeeinheit 14, eine Eingabeeinheit 15 und einen Programmiermodul 16 umfasst. Zudem verfügt der Traktor 2 über ein Lenksystem 17 welches automatisch angesteuert werden kann, sodass sich der Traktor 2 in dem zu bearbeitenden Territorium 5 automatisch auf vordefinierten Fahrtrouten 18 bewegen kann. Diese automatische Führung des Fahrzeugs 1 kann im einfachsten Fall dadurch bewirkt werden, dass in der Steuer- und Auswerteinheit 12 die abzuarbeitenden Fahrtrouten 18 hinterlegt sind, wobei deren Generierung entweder extern oder in der Steuer- und Auswerteinheit 12 selbst erfolgt, Bei externer Generierung werden die externen Fahrtroutensignale 19 dann üblicherweise durch Datenfernübertragung an die Steuer- und Auswerteinheit 12 übergeben. Unter Berücksichtigung der von der GPS-Ortungsvorrichtung 7 generierten Positionssignale 10 des Traktors 2 werden dann in der Steuer- und Auswerteinheit 12 sogenannte Lenksignale 20 generiert und an das Lenksystem 17 übermittelt, sodass das Fahrzeug 1 automatisch auf einer definierten Fahrtroute 18 in dem zu bearbeitenden Territorium 5 geführt werden kann, wobei derartige Systeme allgemein als Spurführungssysteme 48 bezeichnet werden. Es liegt im Rahmen der Erfindung, dass die Positionssignale 10 des Fahrzeugs 1 in dem zu bearbeitenden Territorium 5 auch von optoelektronischen Ortungsvorrichtungen 21, wie etwa einem eine Bestandskante 23 detektierenden Laserscanner 22 generiert werden können Es liegt weiter im Rahmen der Erfindung, dass das als Traktor 2 dargestellte Fahrzeug 1 einerseits als beliebig ausgeführte landwirtschaftliche Arbeitsmaschine, wie etwa als Mähdrescher oder als beliebiges Fahrzeug für nicht landwirtschaftliche Anwendungsfälle, wie etwa als Baufahrzeuge ausgestaltet sein kann.

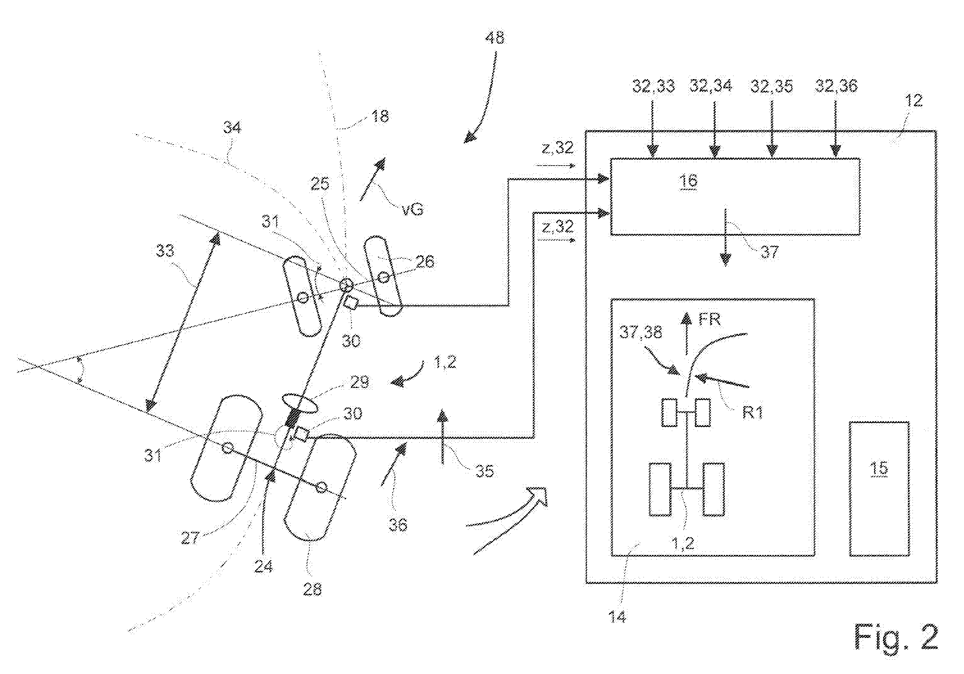

Fig. 2 zeigt eine Detaildarstellung des als Schlepper 2 ausgeführten Fahrzeugs 1 sowie eine vergrößerte Darstellung der erfindungsgemäßen Anzeigeeinheit 14. In der linken Abbildung der Figur 2 ist das Fahrwerk 24 des Schleppers 2 mit lenkbar an der Vorderachse 25 angeordneten Vorderrädern 26 und starr von der Hinterachse 27 aufgenommenen Hinterrädern 28 dargestellt. In an sich bekannter und deshalb nicht näher beschriebener Weise ist dem Lenkrad 29 des Traktors 2 und/oder den gelenkten Vorderrädern 26 jeweils ein Lenkwinkelsensor 30 zur Detektion des Lenkwinkels 31 zugeordnet Die detektierten Lenkwinkelsignale Z werden an den Programmiermodul 16 der Steuer- und Auswerteinheit 12 übermittelt und bilden zugleich einen der erfindungsgemäßen charakteristischen Ausrichtungsparameter 32 des Fahrzeugs 1. Zudem sind die Geometrien des Traktors 2, wie etwa der Achsabstand 33, der maximal zulässige Lenkwinkeleinschlag und der damit verbundene minimale Wendekreis 34 bekannt, die ebenfalls als Bestandteil der erfindungsgemäßen charakteristischen Ausrichtungsparameter 32 in dem Programmiermodul 16 der Steuer- und Auswerteinheit 12 hinterlegt sind. Sofern das Fahrzeug 1 nicht über sogenannte Lenkwinkelsensoren 30 verfügt liegt es im Rahmen der Erfindung, dass die Ausrichtung des Fahrzeugs 1 auch durch Ermittlung der sogenannten Gierrate und der zugehörigen Fahrgeschwindigkeit vG des Fahrzeugs 1 ermittelt werden kann. In einer weiteren Ausgestaltung der Erfindung kann auch vorgesehen sein, dass die charakteristischen Ausrichtungsparameter 32, wie nachfolgend noch näher beschrieben, die Ausrichtung 35 des Fahrzeugs 1 und die Ausrichtung 36 der abzufahrenden Fahrroute 18 umfassen kann, die ebenfalls an die Steuer- und Auswerteinheit 12 übermittelt werden.

In dem Programmiermodul 16 wird dann erfindungsgemäß aus den verfügbaren charakteristischen Ausrichtungsparametem 32 des Fahrzeugs 1 eine virtuelle zukünftige Fahrspur 37 ermittelt. Dabei können die an sich bekannten mathematischen Zusammenhänge entweder alle zuvor beschriebenen charakteristischen Ausrichtungsparameter 32 oder eine Auswahl von diesen berücksichtigen. Ein mathematisch einfach strukturiertes Modell würde sich beispielsweise dann ergeben, wenn allein auf Basis des ermittelten Lenkwinkels 31 und der Fahrzeuggeometrie 33 diese virtuelle zukünftige Fahrspur 37 ermittelt würde. Die ermittelte Form dieser virtuellen zukünftigen Fahrspur 37 wird um so präziser die realen Verhältnisse wiedergeben, je mehr charakteristische Ausrichtungsparameter 32 bei deren Ermittlung berücksichtigt werden. Indem beispielsweise auch noch der kleinst mögliche Wendekreis 34 des Fahrzeugs 1 berücksichtigt wird, kann vermieden werden, dass der Programmiermodul 16 virtuelle zukünftige Fahrspuren 37 generiert, die das Fahrzeug 1 schon aus konstruktiven, technischen Gründen nie abarbeiten kann. In dem AusfÜhrungsbeispiel nach Fig. 2 wird die ermittelte virtuose zukünftige Fahrspur 37 des Fahrzeugs 1 schließlich in der Weise visualisiert, dass in der Anzeigeneinheit 14 zunächst das als Schlepper 2 ausgeführte Fahrzeug 1 abgebildet ist und diesem frontseitig in Fahrrichtung FR gesehen die ermittelte virtuelle zukünftige Fahrspur 37 zugeordnet ist, sodass dem Betreiber 13 des Traktors 2 unmittelbar angezeigt wird, auf welcher Fahrspur 37 der Traktor 1 sich weiter bewegen würde, wenn die gegenwärtig geltenden charakteristischen Ausrichtungsparameter 32 beibehalten wurden.

Der Programmiermodul 16 der Steuer- und Auswerteinheit 12 kann zudem so ausgeführt sein, dass er permanent in Abhängigkeit von den charakteristischen Ausrichtungsparametern 32 die virtuelle zukünftige Fahrspur 37 ermittelt, also deren Form permanent aktualisiert und anzeigt. Im einfachsten Fall erfolgt die Visualisierung der virtuellen zukünftigen Fahrspur 37 in der Weise, dass diese als Führungslinie 38 mit einem aus den charakteristischen Ausrichtungsparametern 32 ermittelten Krümmungsradius R1 dargestellt wird, wobei der Krümmungsradius R1 maßgeblich von dem Lenkwinkel 31 oder der sogenannten Gierrate beeinflusst wird. Eine für den Betreiber 13 des Fahrzeugs 2 schnell erfassbare Visualisierung wird dann erreicht, wenn die virtuelle zukünftige Fahrspur 37 stets als Führungslinie 38 in Fahrtrichtung FR gesehen frontseitig dem Fahrzeug 2 und im einfachsten Fall mittig zugeordnet wird, sodass die Führungslinie 38 stets dem dargestellten Fahrzeug 1 vorauseilt.

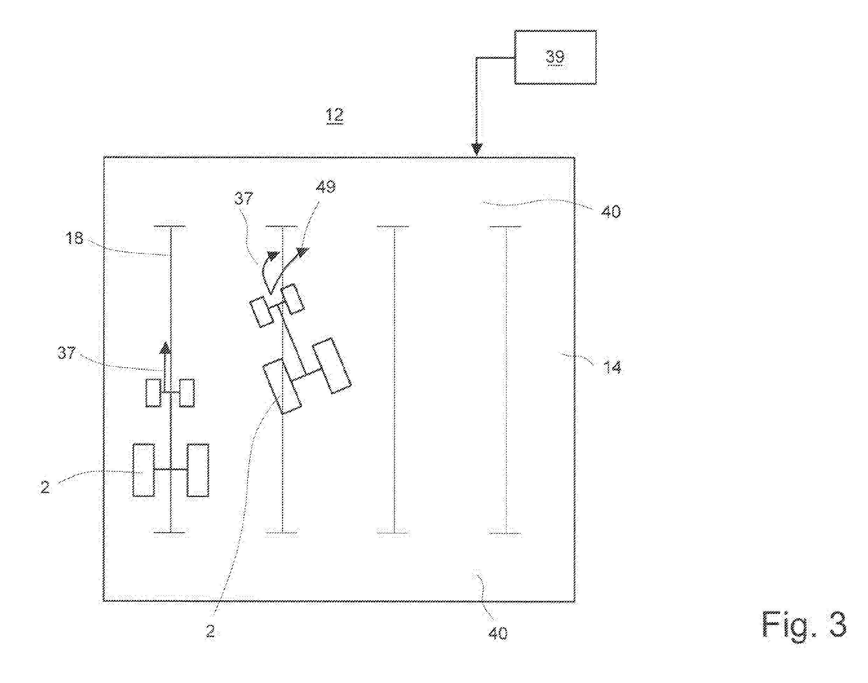

In Fig. 3 ist aus Vereinfachungsgründen nur die Anzeigeeinheit 14 der Steuer- und Auswerteinheit 12 abgebildet, In der Anzeigeeinheit 14 sind zunächst eine Vielzahl von Fahrtrouten 18 dargestellt, die zuvor entweder in einem in die Steuer- und Auswerteinheit 12 integrierten oder separaten Routenplanungssystem 39 definiert wurden. Die Fahrtrouten 18 können entweder wie dargestellt geradlinig ausgeführt und parallel zueinander angeordnet sein, Es ist aber auch denkbar, dass die Fahrtrouten 18 krummlinig gestaltet und gegebenenfalls nicht parallel zueinander verschoben sind. Weiter sind in der Anzeigeeinheit 14 zwei unterschiedliche momentane Positionen eines Schleppers 2 dargestellt, wobei jeder symbolischen Schlepperdarstellung frontseitig die erfindungsgemäße virtuelle zukünftige Fahrtroute 37 zugeordnet ist. In der linken Darstellung verläuft die virtuelle zukünftige Fahrtroute 37 nahezu parallel zur vordefinierten Fahrtroute 18. In der weiteren Darstellung bewegt sich der Schlepper 2 quer zu den vordefinierten Fahrtrouten 18, wobei wiederum frontseitig die aus den charakteristischen Ausrichtungsparametern 32 ermittelte virtuelle zukünftige Fahrtroute 37 der Schlepperdarstellung zugeordnet ist. In einer derartig strukturierten Anzeige kann der Betreiber 13 unmittelbar die Abweichung zwischen vordefinierter Fahrtroute 18 und ermittelter virtueller zukünftiger Fahrtroute 37 erkennen und durch geeignete Lenkmaßnahmen das Fahrzeug 1 so navigieren, dass es mit geringem Steuerungsaufwand wieder die vordefinierte Fahrtroute 18 erreicht. Ein solches Anzeigeprinzip bildet im landwirtschaftlichen Anwendungsfall für den Betreiber 13 einer landwirtschaftlichen Arbeitsmaschine insbesondere dann eine große Hilfestellung, wenn sich das Fahrzeug 1 in dem sogenannten Vorgewende 40 befindet und die nächste abzufahrende, vordefinierte Fahrtroute 18 ansteuert. In diesem Fall kann der Betreiber 13 die Anzeige selbst unmittelbar als Navigationshilfe einsetzen. Eine besonders effektvolle Navigationshilfe wird dann bereitgestellt, wenn in der Anzeigeeinheit 14 neben der virtuellen zukünftigen Fahrtroute 37 auch noch die Fahrtroute 49 für den kleinstmöglichen Wendekreise 34 visualisiert wird. Damit kann der Betreiber 13 des Fahrzeugs 1 noch effizienter die Wendigkeit des Fahrzeuges 1 beim Navigieren in eine nächste Fahrtroute 18 ausnutzen. Die Anzeige des der dem kleinstmöglichen Wendekreis 34 entsprechenden Fahrroute 49 ist besonders im Vorgewende 40 von Bedeutung, da dem Betreiber 13 ein Mittel an die Hand gegeben wird selbst abzuschätzen welche nächstliegende, als nächste abzuarbeitende Fahrtroute 18 von dem Fahrzeug 1 wegen seiner technischen Voraussetzungen überhaupt erreichbar ist.

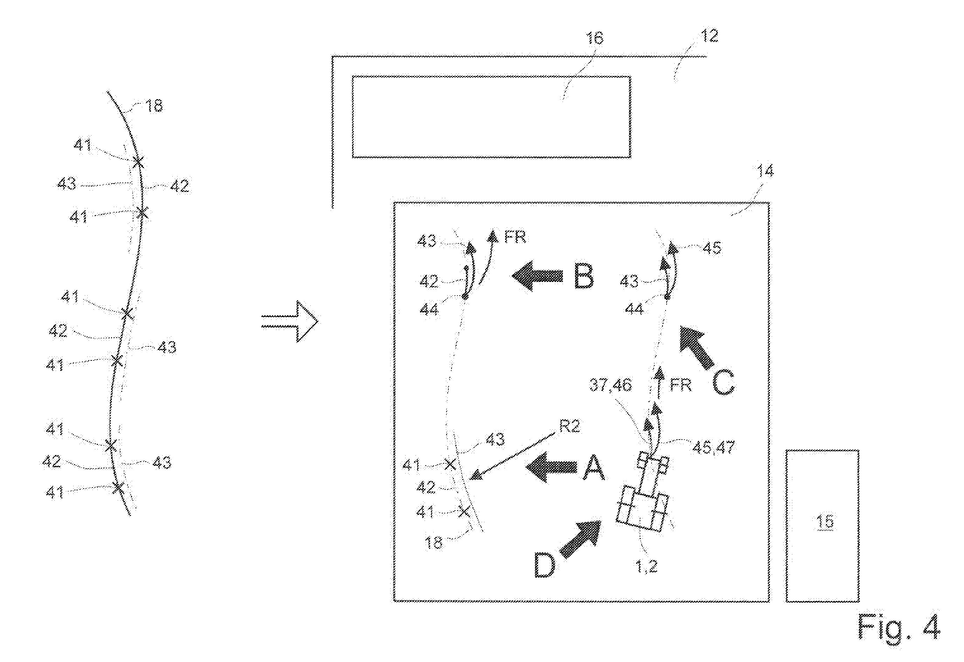

In Fig. 4 ist nun eine weitere Ausführungsform der Struktur der Anzeige der erfindungsgemäßen virtuellen zukünftigen Fahrspur 37 schematisch dargestellt. Zunächst ist eine konturierte krummlinige Fahrtroute 18 abgebildet. Mathematisch kann diese Fahrtroute 18 nun in der Weise beschrieben sein, dass die Fahrtroute 18 zunächst in eine Vielzahl von Stützstellen 41 unterteilt wird und jeweils für den zwischen benachbarten Stützstellen 41 liegenden Konturabschnitt 42 die momentane Krümmung 43 der Fahrtroute 18 in diesem Bereich ermittelt wird. Die Definition dieser Krümmungen 43 wird um so besser den Gesamtverlauf der Fahrtroute 18 beschreiben, je mehr Stützstellen 41 und damit Konturabschnitte 42 auf der vordefinierten Fahrtroute 18 festgelegt werden. Auf diese Weise wird es möglich die vordefinierte Fahrtroute 18 auch in der Form darzustellen, dass neben oder an Stelle der wirklichen Kontur der Fahrtroute 18 auch die in einem bestimmten Konturabschnitt 42 auftretende Krümmung 43 der Fahrtroute 18 unmittelbar in der Anzeigeeinheit 14 der Steuer- und Auswerteinheit 12 anzeigbar ist. Eine besonders übersichtlich strukturierte Visualisierung ergibt sich dann, wenn die in der Anzeigeeinheit 14 visualisierte Bahnkrümmung 43 eines Konturausschnitts 42 der Fahrtroute 18 der momentanen Position des Fahrzeugs 1 auf der vordefinierten Fahrtroute 18 entspricht (Darstellung A in Fig. 4).

Die Übersichtlichkeit der Anzeige kann auch dadurch noch gesteigert werden, dass die momentane Position des Fahrzeugs 1 auf der Fahrtroute 18 in der Anzeigeeinheit 14 einen Fußpunkt 44 definiert in dem die Visualisierung der Bahnkrümmung 43 des jeweiligen Konturabschnitts 42 beginnt und sich in Bewegungsrichtung FR des Fahrzeugs 1 erstreckt (Darstellung B in Fig. 4). Eine hohe Flexibilität des Einsatz der erfindungsgemäßen Steuern und Auswerteinheit 12 ergibt sich dann, wenn die ermittelten Krümmungen 43 der Fahrtrouten 18 in der Steuer und Auswerteinheit 12, etwa in dem Programmiermodul 16, editierbar hinterlegt werden und wiederholt abrufbar sind. Auf diese Weise können die einmal ermittelten Bahnkrümmungen 43 bei der Darstellung paralleler und gleich konturierter Fahrtrouten 18 oder Abschnitten von diesen nachgenutzt werden, ohne dass es einer nochmaligen Unterteilung in Konturabschnitte 42 und der Berechnung der jeweiligen Krümmung 43 bedarf. Die Flexibilität des Systems wird auch dadurch noch erhöht, dass beispielsweise mittels der Eingabeeinheit 15 die ermittelten und hinterlegten Krümmungsradien R2 der Fahrtrouten 18 editiert werden können, sodass der Betreiber 13 des Fahrzeugs 1 die Möglichkeit hat, die Gestalt einer Fahrtroute 18 unmittelbar durch Eingabe der Krümmungsradien R2 zu ändern. Indem nun die so ermittelte Krümmung 43 eines Konturabschnitts 42 der vordefinierten Fahrroute 18 mit einer Auswahl oder allen zuvor beschriebenen charakteristischen Ausrichtungsparametern 32 in der für die Ermittlung der virtuellen zukünftigen Fahrspur 37 beschriebenen Weise verrechnet wird erhält man im Ergebnis eine Sollfahrspur 45 (Darstellung C in Fig. 4), die nunmehr neben den fahrtroutenspezifischen Daten auch fahrzeugspezifische Daten berücksichtigt, sodass die so ermittelte Sollfahrspur 45 präziser von dem jeweiligen Fahrzeug 1 abgearbeitet werden kann, da sie besser auf dessen technische Möglichkeiten abgestimmt ist. Eine verbesserte Übersichtlichkeit wird in diesem Zusammenhang dann erreicht, wenn bei Anzeige der neu ermittelten Sollfahrspur 45 zugleich die Anzeige der vordefinierten Fahrtroute 18 unterdrückt wird.

Gemäß. Darstellung D in Fig. 4 kann in einer weiteren vorteilhaften Ausgestaltung die Visualisierung durch die Anzeigeeinheit 14 so beschaffen sein, dass sowohl die in Abhängigkeit von den charakteristischen Ausrichtungsparametern 32 ermittelte Sollfahrspur 45 als auch die ebenfalls unter Berücksichtigung der charakteristischen Ausrichtungsparameter 32 ermittelte virtuelle zukünftigen Fahrspur 37 gemeinsam angezeigt werden, Eine besonders vorteilhafte Ausgestaltung ergibt sich auch hier wieder, wenn die momentane Position des Fahrzeugs 1, die ermittelte Sollfahrspur 45 und die virtuelle zukünftige Fahrspur 37 des Fahrzeugs 1 gemeinsam in der Weise visualisiert werden, dass die Sollfahrspur 45 und die virtuelle zukünftige Fahrspur 37 des Fahrzeugs 1 in Bewegungsrichtung FR des Fahrzeugs 1 als Kurvenabschnitte 46, 47 der momentanen Position des Fahrzeugs 1 zugeordnet sind. Zudem können die Kurvenabschnitte 46, 47 sowie die anzeigbare Bahnkrümmung 43 in ihrer auf der Anzeigeeinheit 14 abgebildeten Länge variiert werden, beispielsweise dadurch, dass über die Eingabeeinheit 15 eine Länge eingegeben wird, wobei hier auch denkbar wäre, dass die angezeigte Länge fahrgeschwindigkeitsabhängig definiert wird, In diesem Fall könnte die Länge beispielsweise der Wegstrecke entsprechen, welche das Fahrzeug 1 in einem definierten Zeitfenster, beispielsweise in den nächsten 10 Sekunden, zurücklegen wird.

Es liegt im Rahmen des Könnens eines Fachmanns das beschriebene Verfahren und die zugehörige Vorrichtung in nicht dargestellter Weise abzuwandeln oder in anderen als den dargestellten Anwendungsfällen einzusetzen, um die beschriebenen Effekte zu erzielen, ohne dabei den Rahmen der Erfindung zu verlassen.

### Bezugszeichenliste:

- 1: Fahrzeug
- 2: Traktor
- 3: Mähwerk
- 4: Vorsatzgerät
- 5: Territorium
- 6: Bestand
- 7: GPS-Ortungsvorrichtung
- 8: GPS-Satellit
- 9: Positionssignal
- 10: Positionssignal
- 11: Fahrerkabine
- 12: Steuer und Auswerteinheit
- 13: Betreiber
- 14: Anzeigeeinheit
- 15: Eingabeeinheit
- 16: Programmiermodul
- 17: Lenksystem
- 18: Fahrtroute
- 19: Fahrtroutensignal
- 20: Lenksignal
- 21: Ortungsvorrichtung
- 22: Laserscanner
- 23: Bestandskante
- 24: Fahrwerk
- 25: Vorderachse
- 26: Vorderrad
- 27: Hinterachse
- 28: Hinterrad
- 29: Lenkrad
- 30: Lenkwinkelsensor
- 3 1: Lenkwinkel
- 32: Ausrichtungsparameter
- 33: Achsabstand
- 34: Wendekreis
- 35: Ausrichtung Fahrzeug
- 36: Ausrichtung Fahrtroute
- 37: virtuelle zukünftige Fahrtroute
- 38: Führungslinie
- 39: Routenplanungssystem
- 40: Vorgewende
- 41: Stützstelle
- 42: Konturabschnitt
- 43: Krümmung
- 44: Fußpunkt
- 45: Sollfahrspur
- 46: Kurvenabschnitt
- 47: Kurvenabschnitt
- 48: Spurführungssystem
- 49: Fahrtroute

- FR: Fahrtrichtung
- vG: Fahrgeschwindigkeit
- R1: Krümmungsradius
- R2: Krümmungsradius

## Patentansprüche

1. Verfahren zur Visualisierung der Bewegung eines Fahrzeugs, wobei das Fahrzeug zumindest eine mit einer Steuer- und Auswerteinheit gekoppelte Anzeigeeinheit umfasst und wobei die Steuer- und Auswerteinheit mit zumindest einem Spurführungssystem zur Führung des Fahrzeugs entlang von Fahrtrouten gekoppelt ist und die Steuer- und Auswerteinheit zumindest einen die Ausrichtung des Fahrzeugs beschreibenden charakteristischen Ausrichtungsparameter des Fahrzeugs erfasst,
**dadurch gekennzeichnet,**
**dass** die Steuer- und Auswerteinheit (12) unter Berücksichtigung des zumindest einen charakteristischen Ausrichtungsparameters (32) des Fahrzeugs (1, 2) eine virtuelle zukünftige Fahrspur (37) des Fahrzeugs (1, 2) ermittelt und diese virtuelle zukünftige Fahrspur (37) in der Anzeigeeinheit (14) visualisiert wird.

2. Verfahren zur Visualisierung der Bewegung eines Fahrzeugs nach Anspruch 1,
**dadurch gekennzeichnet,**
**dass** der oder die charakteristischen Ausrichtungsparameter (32) den Achsabstand (33) oder den minimalen Wendekreis (34) des Fahrzeugs (1, 2) und den momentanen Lenkwinkel (31) umfassen.

3. Verfahren zur Visualisierung der Bewegung eines Fahrzeugs nach Anspruch 1,
**dadurch gekennzeichnet,**
**dass** der oder die charakteristischen Ausrichtungsparameter (32) den Achsabstand (33) oder den minimalen Wendekreis (34) des Fahrzeugs (1, 2) und eine Kombination aus Gierrate und Fahrgeschwindigkeit (vG) des Fahrzeugs (1, 2) umfassen.

4. Verfahren zur Visualisierung der Bewegung eines Fahrzeugs nach einem der vorhergehenden Ansprüche,
**dadurch gekennzeichnet.**
**dass** die charakteristischen Ausrichtungsparameter (32) weiterhin die Ausrichtung (35) des Fahrzeugs (1, 2) und die Ausrichtung (36) der abzufahrenden Fahrtroute (18) sein können.

5. Verfahren zur Visualisierung der Bewegung eines Fahrzeugs nach Anspruch 1,
**dadurch gekennzeichnet,**
**dass** die visualisierte virtuelle zukünftige Fahrspur (37) permanent ermittelt und angezeigt wird.

6. Verfahren zur der Bewegung eines Fahrzeugs nach einem der vorhergehenden Ansprüche,
**dadurch gekennzeichnet,**
**dass** die visualisierte virtuelle zukünftige Fahrspur (37) einen Krümmungsradius (R1) aufweist und der Krümmungsradius (R1) sich in Abhängigkeit vom Lenkwinkel (31) oder der Gierrate ändert.

7. Verfahren zur Visualisierung der Bewegung eines Fahrzeugs nach einem der vorhergehenden Anspruche,
**dadurch gekennzeichnet,**
**dass** die Anzeige der virtuellen zukünftigen Fahrspur (37) in der Weise erfolgt, dass in der Anzeigeeinheit (14) die aktuelle Position des Fahrzeugs (1, 2) visualisiert wird und in Bewegungsrichtung (FR) des Fahrzeugs (1, 2) die virtuelle zukünftige Fahrspur (37) als Führungslinie (38) der visualisierten Position des Fahrzeugs (1, 2) vorausläuft

8. Verfahren zur Visualisierung der Bewegung eines Fahrzeugs nach einem der vorhergehenden Ansprüche,
**dadurch gekennzeichnet,**
**dass** eine oder mehrere Fahrtrouten (18) des Spurführungssystems (48) und die virtuelle zukünftige Fahrspur (37) in einer gemeinsamen Anzeige visualisiert werden

9. Verfahren zur Visualisierung der Bewegung eines Fahrzeugs nach einem der vorhergehenden Ansprüche,
**dadurch gekennzeichnet.**
**dass** die von dem Fahrzeug (1, 2) abzufahrende Fahrtroute (18) in eine Vielzahl von virtuellen Stützstellen (41) unterteilt wird und für den zwischen benachbarten Stützstellen (41) liegenden Konturausschnitt (42) der Fahrtroute (18) jeweils die Bahnkrümmung (43) ermittelt und in einer Anzeigeneinheit (14) visualisiert wird.

10. Verfahren zur Visualisierung der Bewegung eines Fahrzeugs nach Anspruch 9,
**dadurch gekennzeichnet,**
**dass** in der Anzeigeeineinheit (14) die Fahrtroute (18) und/oder die Bahnkrümmung (43) eines Konturausschnitts (42) angezeigt wird.

11. Verfahren zur Visualisierung der Bewegung eines Fahrzeugs nach Anspruch 10,
**dadurch gekennzeichnet,**
**dass** die in einer Anzeigeeinheit (14) visualisierte Bahnkrümmung (43) eines Konturausschnitts (42) der Fahrtroute (18) der momentanen Position des Fahrzeugs (1, 2) auf der Fahrtroute (18) entspricht.

12. Verfahren zur Visualisierung der Bewegung eines Fahrzeugs nach einem der Ansprüche 9 bis 11,
**dadurch gekennzeichnet,**
**dass** die momentane Position des Fahrzeugs (1, 2) auf der Fahrtroute (18) in der Anzeigeeinheit (14) einen Fußpunkt (44) definiert in dem die Visualisierung der Krümmung (43) des jeweiligen Konturabschnitts (42) beginnt und sich in Bewegungsrichtung (FR) des Fahrzeugs (1, 2) erstreckt.

13. Verfahren zur Visualisierung der Bewegung eines Fahrzeugs nach einem der Ansprüche 9 bis 12,
**dadurch gekennzeichnet,**
**dass** die ermittelten Krümmungen (43) der Konturabschnitte (42) der Fahrtrouten (18) in der Steuer- und Auswerteinheit (12) editierbar hinterlegt werden und wiederholt abgerufen werden können.

14. Verfahren zur Visualisierung der Bewegung eines Fahrzeugs nach Anspruch 13,
**dadurch gekennzeichnet,**
**dass** die Krümmungsradien (R2) der hinterlegten Krümmungen (43) änderbar sind.

15. Verfahren zur Visualisierung der Bewegung eines Fahrzeugs nach einem der vorhergehenden Ansprüche,
**dadurch gekennzeichnet,**
**dass** aus der ermittelten Krümmung (43) und wenigstens einem charakteristischen Ausrichtungsparameter (32) des Fahrzeugs (1, 2) eine Sollfahrspur (45) des Fahrzeugs (1, 2) abgeleitet wird.

16. Verfahren zur Visualisierung der Bewegung eines Fahrzeugs nach Anspruch 15,
**dadurch gekennzeichnet,**
**dass** die ermittelte Sollfahrspur (45) in einer Anzeigeneinheit (14) visualisierbar ist und wobei zugleich die Anzeige der jeweiligen Fahrtroute (18) unterdrückt wird.

17. Verfahren zur Visualisierung der Bewegung eines Fahrzeugs nach einem der vorhergehenden Ansprüche,
**dadurch gekennzeichnet,**
**dass** die ermittelte Sollfahrspur (45) und die virtuelle zukünftige Fahrspur (37) des Fahrzeugs (1, 2) in einer gemeinsamen Anzeige (14) visualisiert werden,

18. Verfahren zur Visualisierung der Bewegung eines Fahrzeugs nach Anspruch 17,
**dadurch gekennzeichnet,**
**dass** die momentane Position des Fahrzeugs (1, 2), die ermittelte Sollfahrspur (45) und die virtuelle zukünftige Fahrspur (37) des Fahrzeugs (1, 2) gemeinsam in der Weise visualisiert werden, dass die Sollfahrspur (45) und die virtuelle zukünftige Fahrspur (37) des Fahrzeugs (1, 2) in Bewegungsrichtung (FR) des Fahrzeugs (1, 2) als Kurvenabschnitte (46, 47) der momentanen Position des Fahrzeugs (1, 2) zugeordnet sind.

19. Verfahren zur Visualisierung der Bewegung eines Fahrzeugs nach einem der vorhergehenden Ansprüche,
**dadurch gekennzeichnet,**
**dass** die Länge der visualisierten Kurvenabschnitte (46, 47) der Sollfahrspur (45), der virtuellen zukünftigen Fahrspur (37) und der Krümmung (43) der Konturabschnitte (42) der Fahrtrouten (18) wählbar ist.

20. Verfahren zur Visualisierung der Bewegung eines Fahrzeugs nach einem der vorhergehenden Ansprüche,
**dadurch gekennzeichnet,**
**dass** in der Anzeigeeinheit (14) die in Abhängigkeit von dem kleinstmöglichen Wendekreis (34) abfahrbare Fahrtroute (49) visualisiert wird.

21. Vorrichtung zur Durchführung des Verfahrens nach einem der vorhergehenden Ansprüche,
**dadurch gekennzeichnet,**
**dass** das Fahrzeug (1, 2) eine mit einer Steuer- und Auswerteinheit (12) gekoppelte Anzeigeeinheit (14) umfasst und wobei die Steuer- und Auswerteinheit (12) mit zumindest einem Spurführungssystem (48) zur Führung des Fahrzeugs (1, 2) entlang von Fahrtrouten (18) gekoppelt ist und die Steuer-und Auswerteinheit (12) unter Berücksichtigung zumindest eines charakteristischen Ausrichtungsparameters (32) des Fahrzeugs (1, 2) eine virtuelle zukünftige Fahrspur (37) des Fahrzeugs (1, und/oder eine Sollfahrspur (45) des Fahrzeugs (1, 2) und/oder eine Krümmung (43) der Fahrtroute (18) ermitteln und in einer Anzeigeeinheit (14) visualisiert.
